# EUROPÄISCHE PATENTSCHRIFT

(11) **EP 0 938 020 B1**
(45) Veröffentlichungstag und Bekanntmachung des Hinweises auf die Patenterteilung: **07.04.2004**
(21) Anmeldenummer: 99890025.2
(22) Anmeldetag: 28.01.1999
(51) Int. Cl.: G03B 17/26

(54) **Kamerasystem**
Camera system
Système de caméra

(30) Priorität: 18.02.1998 AT 28998
(43) Veröffentlichungstag der Anmeldung: 25.08.1999
(73) Patentinhaber: Bauer, Fritz, A-3002 Purkersdorf (AT)
(72) Erfinder: Bauer, Fritz, A-3002 Purkersdorf (AT)
(74) Vertreter: Gibler, Ferdinand, Dipl.-Ing. Dr.

(56) Entgegenhaltungen:
- AT-B- 394 458
- DE-A- 3 816 742
- US-A- 3 809 465
- US-A- 3 867 023
- US-A- 4 082 436
- US-A- 4 418 994

## Beschreibung

Die Erfindung betrifft ein Filmkamerasystem gemäß dem Oberbegriff des Anspruches 1.

Bekannte Systeme dieser Art ermöglichen das Positionieren des Filmmagazins in den genannten zwei Stellungen, um so eine bessere Führung der Filmkamera zu erzielen. Wird die Kamera mit einem Schulterstativ geführt, so bringt eine Befestigung des Filmmagazins an der hinteren Kameraseite den Vorteil einer ausgeglichenen Gewichtsverteilung um die Schulter des Kameramannes, sodass dieser außer für das Tragen des Kameragewichtes nicht zusätzlich Kraft aufbringen muss, um die Kamera gegen ein Verkippen zu sichern.

Bei Anbringen auf einem ortsfesten Stativ ermöglicht die obere Position des Filmmagazins eine im wesentlichen bessere Zugänglichkeit zum Okular und erleichtert das Ausführen von Schwenkbewegungen.

Bisherige bekannte Ausführungen von Filmkamerasystemen weisen zwei Öffnungen zur Aufnahme des Filmmagazins auf, wobei die jeweils andere Öffnung durch eine Abdeckplatte verschließbar ist.

So offenbart die US 4 082 436 A ein Kameragehäuse, das zwei getrennte Öffnungen für den Anschluss eines Filmmagazins in unterschiedlichen Stellungen aufweist. Für die jeweils freiwerdende Öffnung im- Kameragehäuse ist eine zusätzliche Abdeckplatte Bestandteil des Kamerasystems, die den Nachteil aufweist, dass sie bei einem Wechsel der Magazinstellung abgenommen und auf die jeweils andere Öffnung wieder aufgesetzt werden muss. In der Praxis ergibt sich dadurch das Problem, das die relativ kleinen Abdeckplatten während der Filmarbeiten von Kameraassistenten verlegt werden, wodurch sich insgesamt eine relativ zeitaufwendige Magazinumstellung ergibt.

Weiters sind auch Lösungen mit nur einer Gehäuseöffnung bekannt, wobei allerdings für die beiden Stellungen des Magazins verschiedene Abdeck- bzw. Anschlussplatten zur Abdeckung der Gehäuseöffnung eingesetzt werden.

So zeigt die AT 394 458 B ein Gehäuse für eine Filmkamera mit einem aufsteckbaren Filmmagazin, das in verschiedenen Lagen auf dem Gehäuse angebracht werden kann. Das Gehäuse weist dabei nur eine Öffnung zur Durchführung des Films auf. Es sind dabei zwei unterschiedliche Aufnahmeteile vorgesehen, die wahlweise zur Abdeckung eines Teiles der Öffnung zur Durchführung des Films auf der Außenseite des Gehäuses befestigbar sind und die eine Klemmeinrichtung zur Fixierung des Filmmagazins aufweisen.

In beiden Fällen ergibt sich zusammen mit den Befestigungsmitteln eine relativ hohe Anzahl an Einzelteilen, die eine entsprechende Vielfalt bei der Herstellung und Lagerhaltung verursacht. Aufgrund der relativ unübersichtlichen Handhabung dieser Einzelteile können diese den Kamerabetrieb beeinträchtigen, da erfahrungsgemäß die kleinen Abdeck- und Anschlussteilen häufig verlegt werden bzw. verloren gehen können und dies Produktionsausfälle zur Folge haben können.

Außerdem wurden verschiedene Filmkassetten bekannt, die jedoch nicht dazu vorgesehen sind, in verschiedenen Stellungen an einem Filmgehäuse montiert zu werden.

So ist in der DE 38 16 742 A1 eine Filmkassette gezeigt, die aus einer Zweiraum-Tageslichtkassette mit einem Kassettenrumpf besteht, der eine Antriebskupplung und einen Filmvorratsbehälter enthält, und einem abnehmbaren Aufwickel-Filmbehälter, der an der Oberseite des Filmvorratsbehälters angelenkt ist, wobei eine Klinkenverbindung eine sichere Arretierung des abnehmbaren Aufwickel-Filmbehälters am Kassettenrumpf gewährleistet. Der Aufwickelbehälter kann je nach Bedarf vom Kassettenrumpf durch Lösen der Klink- oder Rastverbindung abgenommen werden. Eine Ihrer Erfindung entsprechende Anordnung des Filmmagazins in zwei Positionen ist nicht möglich.

Weiters wurde auch schon in der US 4 418 994 A vorgeschlagen, den Durchmesser der Filmaufwickelspule mittels einer Schwenkvorrichtung zu messen, die mit ihrem einen Arm auf der Filmspule rollend aufliegt und mit ihrem anderen Arm ein 'Potentiometer verstellt, das über seine Stellung eine Bremsvorrichtung beeinflusst, die das auf die Filmspule wirkende Drehmoment kontrolliert.

Weiters zeigt die US 3 867 023 A eine selbstentwickelnde Filmkassette, bei der die Filmentwicklung innerhalb der Kassette vorgenommen wird.

Schließlich befasst sich auch die US 3 809 465 A mit einer Mehrzweck-Filmkassette, mit der neben der eigentlichen Belichtung des Filmmaterials auch die Entwicklung desselben vorgenommen werden kann.

Aufgabe der Erfindung ist es, ein Kamerasystem der eingangs erwähnten Art anzugeben, mit dem die Verbindbarkeit des Filmmagazins in zwei Stellungen auf technisch einfache Weise und mit einer geringen Zahl an Einzelteilen erzielbar ist.

Weitere Aufgabe ist es, ein Kamerasystem anzugeben, das eine möglichst formstabile und einfach zu bedienende Abdeckung der Kameraöffnung ermöglicht, mit der eine zuverlässige und alterungsbeständige Licht- bzw. Staubdichtheit erzielbar ist.

Erfindungsgemäß wird dies bei einem Filmkamerasystem der eingangs erwähnten Art durch die kennzeichnenden Merkmale des Anspruches 1 erreicht.

Auf diese Weise verschließt das das Filmmagazin tragende Anschlusselement die Kameraöffnung in der ersten und in der zweiten Stellung, sodass keine weiteren Einzelteile mehr benötigt werden.

Durch die Merkmale des Anspruches 2 kann das Filmmagazin durch einfaches Verdrehen um die Symmetrieachse von der ersten in die zweite Stellung gebracht und in dieser Position am Kameragehäuse fixiert werden. Genauso verläuft der umgekehrte Vorgang. Im wesentlichen kann die Änderung der Magazinstellung mit wenigen Handgriffen geschehen und es ist immer gewährleistet, dass das Anschlusselement selbst nicht verloren gehen kann oder ausgetauscht werden muss. Damit ist der Wendevorgang durch nur eine Person ohne die Hilfe eines Assistenten ausführbar.

Durch die Merkmale des Anspruches 3 wird das Eindringen von ' Teilchen und Staub, Sand o.ä. in das Kameragehäuse wirkungsvoll vermieden.

Durch die Merkmale des Anspruches 4 ergeben sich zwei V-Schenkel, die sowohl in der ersten und in der zweiten Stellung des Kameragehäuses den fehlenden Teil des Kameragehäuses nachbilden, der dieses beim Verbinden mit dem Anschlusselement lichtdicht abschließt, wobei die V-Profilform eine mechanisch stabile Befestigung am Kameragehäuse ermöglicht.

Durch die Merkmale des Anspruches 5 ergibt sich der Vorteil, dass beim Wechsel des Kameramagazins von der oberen in die hintere Stellung der Handgriff automatisch in die jeweils gegenüberliegende Stellung wandert und dadurch ein bequemes Tragen ermöglicht.

Dabei kann durch die Merkmale des Anspruches 6 die Kraft zum Halten bzw. Führen der Kamera ungefähr zwischen den beiden Teilschwerpunkten Filmmagazin und Kameragehäuse ausgeübt werden, sodass das erfindungsgemäße Kamerasystem ohne große Anstrengungen getragen bzw. geführt werden kann.

Zum Erzielen eines besonders wirksamen licht- bzw. staubdichten Abschlusses ist es vorteilhaft die Merkmale des Anspruches 7 vorzusehen.

Nachstehend wird die Erfindung anhand des in den Zeichnungen dargestellten Ausführungsbeispieles eingehend erläutert. Es zeigt dabei
Fig. 1 einen Schnitt durch ein Filmmagazin und ein Anschlusselement;
Fig.2 einen teilweisen Schnitt durch ein Kameragehäuse;
Fig.3 einen teilweisen Schnitt durch eine Ausführungsform des erfindungsgemäßen Filmkamerasystems mit einem Filmmagazin in der ersten, oberen Stellung;
Fig.4 einen teilweisen Schnitt durch das Kamerasystem gemäß Fig.3 mit dem Filmmagazin in der zweiten, hinteren Stellung;
Fig.5 eine Seitenansicht des Kamerasystems gemäß Fig.3 und
Fig.6 eine Seitenansicht des Kamerasystems gemäß Fig.4.

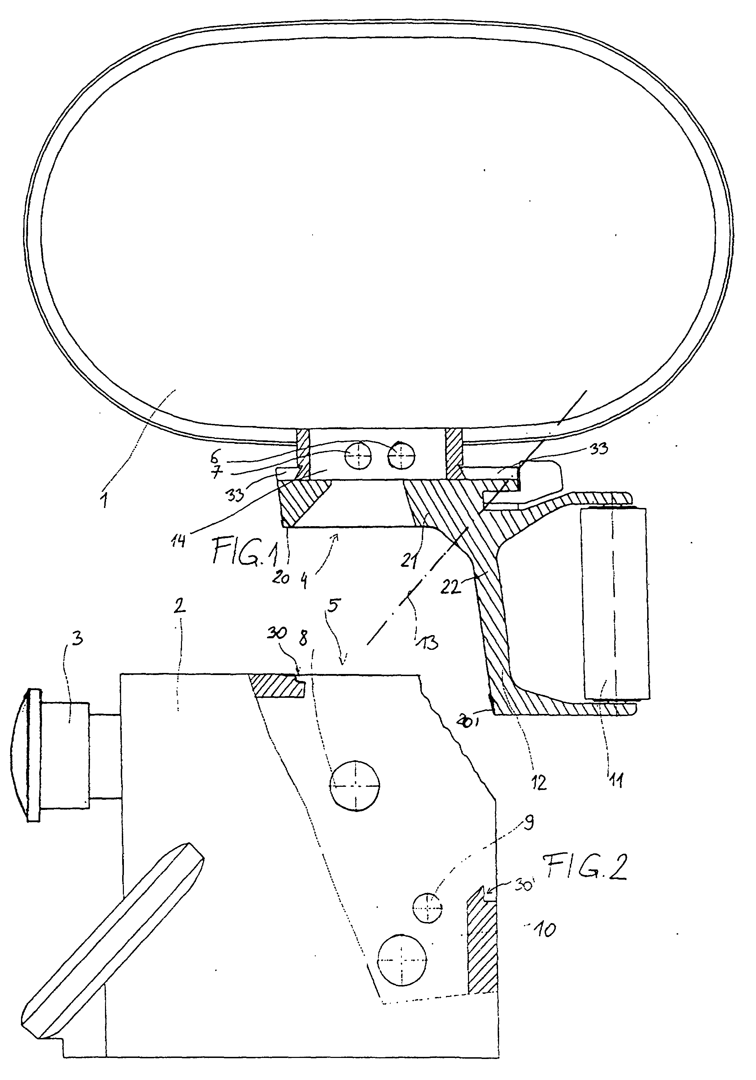

Fig.1 zeigt unter anderem ein Filmmagazin 1, wie es aus dem Stand der Technik bekannt ist und in dem eine nicht dargestellte Abwickel- und Aufwickelspule angebracht sind, über die ein Film durch ein Kameragehäuse förderbar ist. Zu diesem Zweck ist eine flanschartige Filmmagazinöffnung 14 vorgesehen, in der zwei Umlenkrollen 6, 7 angeordnet sind, die eine Filmbewegung in ein Kameragehäuse und aus diesem heraus ermöglichen.

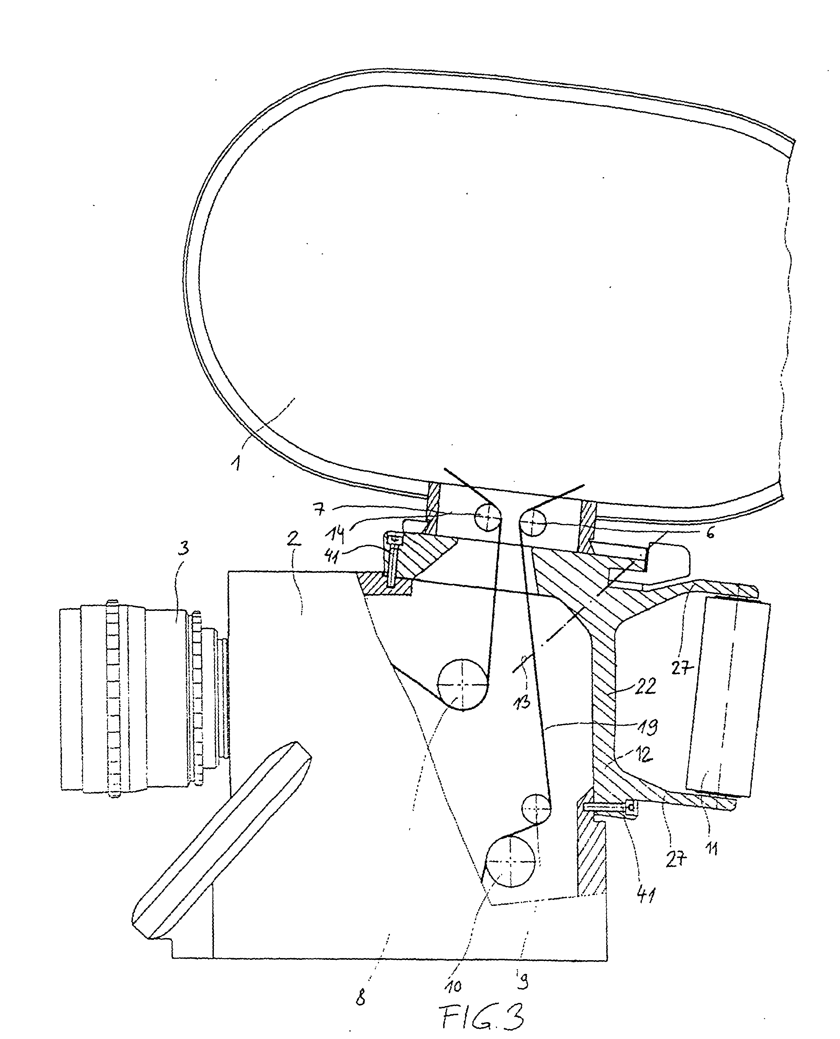

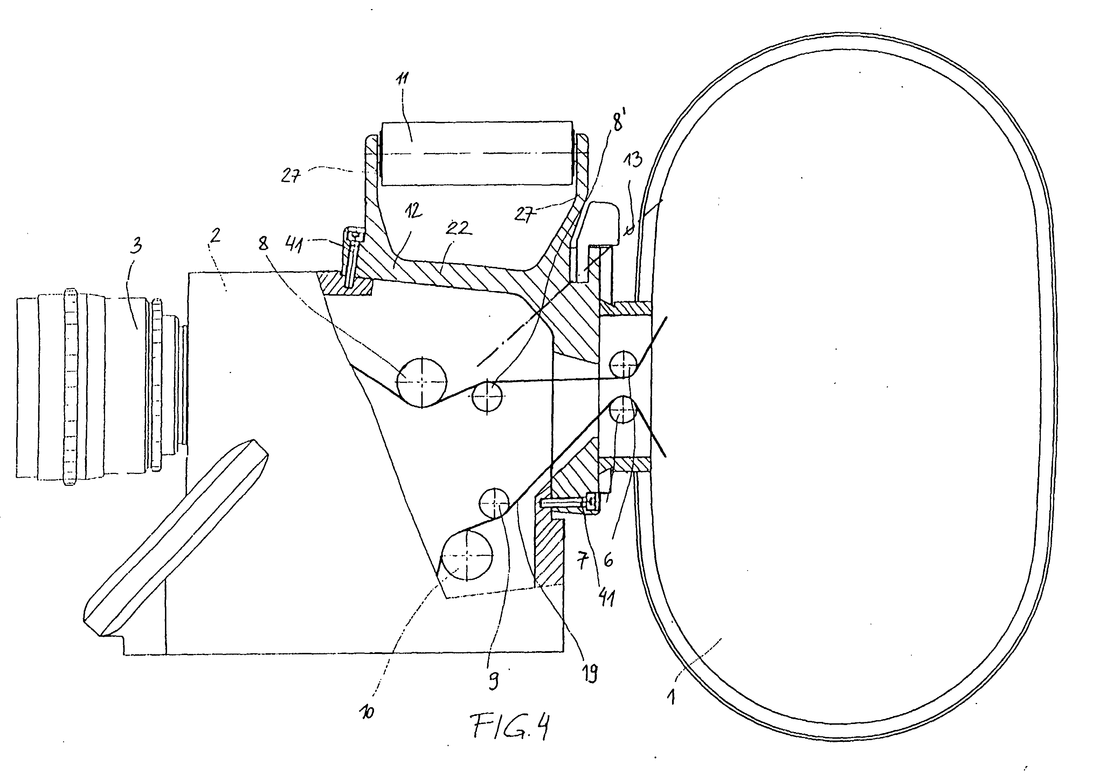

In Fig.2 ist dazu ein Kameragehäuse 2 mit einer Öffnung 5 gezeigt, über welche der aus der Filmmagazinöffnung 14 kommende Film in das Kameragehäuse einführbar und aus diesem ausführbar ist. Das Filmmagazin 1 kann - in der in Fig.2 gezeigten Grundposition des Kameragehäuses 2 gesehen - in einer ersten Stellung im wesentlichen oberhalb des Gehäuses, die in Fig. 3 dargestellt ist, und in einer zweiten, in Fig.4 dargestellten Stellung im wesentlichen an der vom Objektiv 3 abgewandten, hinteren Seite des Gehäuses 2 fixiert werden.

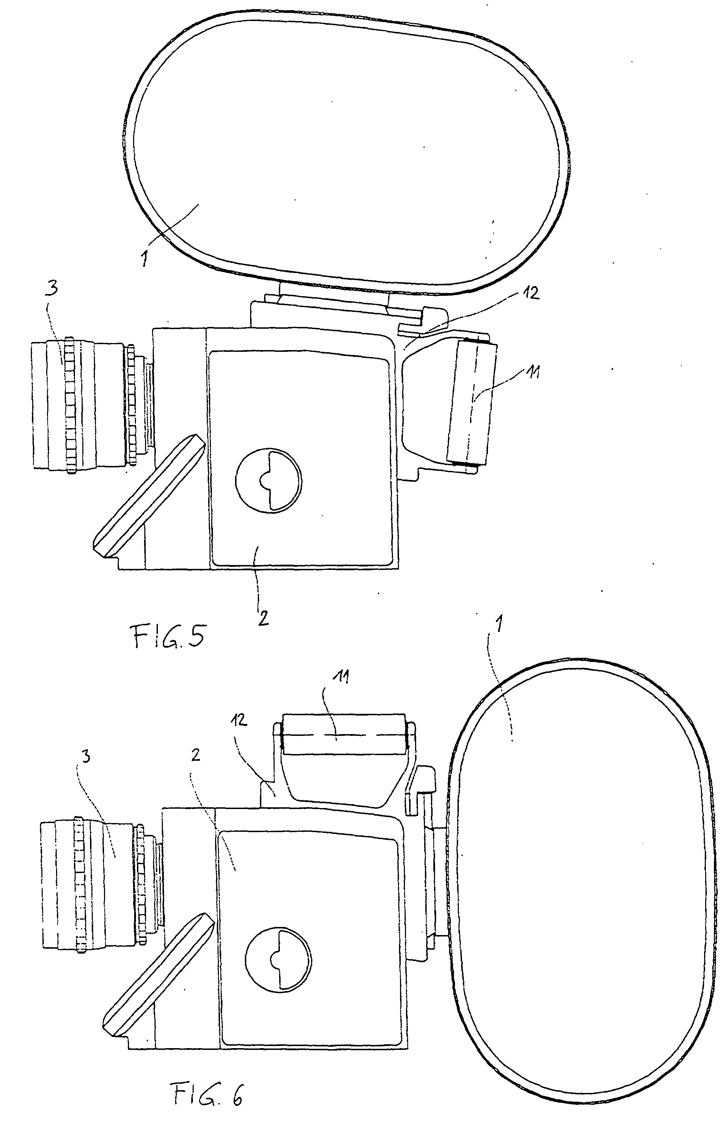

Erfindungsgemäß ist dazu ein einziges Anschlußelement 12 mit einer Durchtrittsöffnung 4 für den Film vorgesehen. welches sowohl in der ersten (Fig.3, Fig.5) als auch in der zweiten Stellung (Fig.4, Fig.6) des Filmmagazins 1 unter lichtdichter Abdeckung der Gehäuseöffnung 5 mit dem Gehäuse 2 verbindbar ist.

Wie aus Fig. ersichtlich, ist das Anschlußelement 12 mit dem Filmmagazin 1 über ein nicht näher dargestelltes Schnappelement 33 verbindbar, sodaß die Filmmagazinöffnung 14 und die Durchtrittsöffnung 4 im wesentlichen übereinander zu liegen kommen. Durch die Durchtrittsöffnung 4 nimmt der Film 19 einmal den in Fig. 3 dargestellten Weg von oben kommend über die Gehäuse-Umlenkrollen 8 bzw. 10. 9 und einmal von der hinteren Stellung kommend den in Fig.4 dargestellten Weg.

Das Anschlußelement 12 weist - im Querschnitt gesehen - zumindest zwei Kontaktbereiche 20, 20' auf, die mit der Berandung der Gehäuseöffnung 5 in der ersten und der zweiten Stellung in Anlage bringbar sind und die um eine 180°-Symmetrieachse 13 symmetrisch angeordnet sind.

Bei Verdrehen des Anschlußelementes um diese Symmetrieachse 13 ist das Kameramagazin 1 von der ersten in die zweite Stellung überführbar und umgekehrt.

Wie aus der Schnittdarstellung der Fig.1 bis 4 nicht vollständig zu erkennen ist, ist das Anschlußelement 12 in der ersten und der zweiten Stellung des Filmmagazins 1 zumindest bereichsweise formschlüssig mit dem Kameragehäuse 2 verbindbar. Damit wird erreicht, daß das Anschlußelement nach allen Seiten hin im wesentlichen jenen Verlauf nimmt, mit dem das Gehäuse 2 vollständig an seiner Außenwand vervollständigt wird.

Aus Fig. 1 ist zu erkennen, daß das Anschlußelement 12 einen im wesentlichen V-förmigen Querschnitt aufweist und die 180°-Symmetrieachse 13 durch die Winkelsymmetrale zwischen den Innenflächen der beiden V-Schenkel 21, 22 verläuft.

An das Anschlußelement 12 ist eine gabelförmige Halterung angeformt ist, in der ein Haltegriff 11 angebracht ist. mit dem das erfindungsgemäße Kamerasystem gut in Balance gehalten werden kann. sodaß eine verwackelfreie Kameraführung ohne Zuhilfenahme eines Stativs nur mit dem Haltegriff 11 möglich ist.

Die Längsachse des Haltegriffes 11 verläuft dabei parallel zu einem der V-Schenkel 21, 22. Dies ermöglicht größtmögliche Stabilität der Haltegriff-Fixierung.

Um eine verläßliche licht- und staubdichte Abdeckung zu ermöglichen. ist die Berandung der Gehäuseöffnung mit einer nutartigen Vertiefung 30, 30' versehen, die gegengleich zu den Kontaktbereichen 20, 20' des Anschlußelements 12 verläuft. Dadurch wird das Einsetzen des Anschlußelementes 12 nach dem Wenden erleichtert und es ist sichergestellt, daß auch nach oftmaligen Wendevorgängen kein Licht und keine Teilchen, wie Staub. Sand o.ä. in das Innere des Kameragehäuses 2 eindringen können.

Das Anschlußelement 12 ist mit in den Fig. 3 und 4 dargestellten Schraubverbindungen 41 mit dem Kamerasehäuse 2 verbindbar. Die Festlegung des Anschlußelementes 12 erfolgt dabei auf solche Weise, daß die durch die Gehäuseöffnung 5 hervorgerufene Steifigkeitsverminderung ausgeglichen wird und auch die durch das Magazingewicht und den Handgriff zu übertragenden Kräfte keinen Einfluß auf die Licht- und Staubdichtheit des Kameragehäuses 2 ausüben können.

## Patentansprüche

1. Filmkamerasystem mit einem Gehäuse und einem Filmmagazin, wobei das Gehäuse eine Öffnung aufweist, über welche der Film aus der Filmmagazinöffnung einführbar und in diese wieder ausführbar ist, und wobei das Filmmagazin - in Grundposition des Kameragehäuses gesehen - in einer ersten Stellung im wesentlichen oberhalb des Gehäuses und in einer zweiten Stellung im wesentlichen an der vom Objektiv abgewandten, hinteren Seite des Gehäuses fixierbar ist, wobei der Film in beiden Stellungen durch die Öffnung des Gehäuses ein- und ausführbar ist, **dadurch gekennzeichnet, dass** ein einziges, mit dem Filmmagazin (1) verbindbares Anschlusselement (12) mit zumindest einer Durchtrittsöffnung (4) für den Film vorgesehen ist, welches sowohl in der ersten als auch in der zweiten Stellung des Filmmagazins (1) unter lichtdichter Abdeckung der Gehäuseöffnung (5) mit dem Gehäuse (2) verbindbar ist, wobei das Anschlusselement (12) sowohl die Durchtrittsöffnung (4) für den Film, als auch die Abdeckung für die restliche Gehäuseöffnung (5) in einem einzigen Teil vereint.

2. Filmkamerasystem nach Anspruch 1, **dadurch gekennzeichnet, dass** das Anschlusselement (12) zumindest zwei Kontaktbereiche (20, 20') aufweist, die mit der Berandung der Gehäuseöffnung (5) in der ersten und der zweiten Stellung in Anlage bringbar und die um eine 180° Symmetrieachse (13) symmetrisch angeordnet sind.

3. Filmkamerasystem nach Anspruch 1 oder 2, **dadurch gekennzeichnet, dass** das Anschlusselement (12) in der ersten und der zweiten Stellung des Filmmagazins (1) zumindest bereichsweise formschlüssig mit dem Kameragehäuse (2) verbindbar ist.

4. Filmkamerasystem nach Anspruch 2 oder 3, **dadurch gekennzeichnet, dass** das Anschlusselement einen im wesentlichen V-förmigen Querschnitt aufweist und die 180°-Symmetrieachse entlang einer Winkelsymmetrale zwischen den Innenflächen der beiden V-Schenkel (21, 22) verläuft.

5. Filmkamerasystem nach Anspruch 1 bis 4, **dadurch gekennzeichnet, dass** an das Anschlusselement (12) eine gabelförmige Halterung angeformt ist, in der ein Haltegriff (11) angebracht ist.

6. Filmkamerasystem nach Anspruch 5, **dadurch gekennzeichnet, dass** die Längsachse des Haltegriffes (11) parallel zu einem der V-Schenkel (21, 22) verläuft.

7. Filmkamerasystem nach einem der Ansprüche 2 bis 6, **dadurch gekennzeichnet, dass** die Berandung der Gehäuseöffnung (5) mit einer nutartigen Vertiefung (30, 30') versehen ist, die gegengleich zu den Kontaktbereichen (20, 20') des Anschlusselements (12) verläuft.

## Claims

1. A film camera system with a housing and a film magazine, with the housing comprising an opening through which the film can be introduced from the film magazine opening and can be removed again through the same and with the film magazine, when seen in the basic position of the camera housing, being fixable in a first position substantially above the housing and in a second position substantially on the rear side of the housing which is averted from the lens, with the film being introducible and removable in both positions through the opening of the housing, **characterized in that** a single connecting element (12) is provided which can be connected with the film magazine (1), comprises at least one pass-through opening (4) for the film and can be connected with the housing (2) both in the first as well as the second position of the film magazine (1) by covering the opening (5) in the housing in a light-tight way, with the connecting element (12) connecting in a single part both the pass-through opening (4) for the film as well as the cover for the remaining opening (5) of the housing.

2. A film camera system as claimed in claim 1, **characterized in that** the connecting element (12) comprises at least two contact zones (20, 20') which can be brought into contact with the edge of the housing opening (5) in the first and second position and which are arranged symmetrically about an axis of symmetry (13) of 180°.

3. A film camera system as claimed in claim 1 or 2, **characterized in that** the connecting element (12) can be connected at least in sections in a positive-locking manner with the camera housing (2) in the first and second position of the film magazine (1).

4. A film camera system as claimed in claim 2 or 3, **characterized in that** the connecting element has a substantially V-shaped cross section and the 180° axis of symmetry extends along an angular symmetric line between the inside surfaces of the two V-legs (21,22).

5. A film camera system as claimed in claim 1 to 4, **characterized in that** a fork-like holding device is formed on the connecting element (12) in which handle (11) is attached.

6. A film camera system as claimed in claim 5, **characterized in that** the longitudinal axis of the handle (11) extends parallel to one of the V-Iegs (21, 22).

7. A film camera system as claimed in one of the claims 2 to 6, **characterized in that** the edge of the opening (5) of the housing is provided with a groove-like recess (30, 30') which extends diametrically opposed to the contact zones (20, 20') of the connecting element (12).

## Revendications

1. Système caméra avec un boîtier et un chargeur pour la pellicule, le boîtier comportant une ouverture au travers de laquelle la pellicule est destinée à être retirée de, et introduite dans, l'orifice du chargeur et le chargeur, vu dans la position de base du boîtier de la caméra, étant adapté pour être fixé dans une première position sensiblement au-dessus du boîtier et dans une deuxième position sensiblement sur le côté arrière du boîtier détourné de l'objectif, la pellicule pouvant être introduite et retirée par l'ouverture dans le boîtier dans les deux positions du chargeur, **caractérisé en ce qu'**est prévu un seul élément de raccordement (12) qui est destiné à être relié au chargeur (1) et est pourvu d'au moins un orifice (4) pour le passage de la pellicule et qui est adapté pour être relié au boîtier (2) dans la première comme dans la deuxième position du chargeur (1) alors que l'ouverture (5) dans le boîtier est recouverte de manière à ne pas laisser passer la lumière, l'élément de raccordement (12) réunissant dans une seule et même pièce l'orifice (4) pour le passage de la pellicule et l'élément de recouvrement pour le reste de l'ouverture (5) dans le boîtier.

2. Système caméra selon la revendication 1, **caractérisé en ce que** l'élément de raccordement (12) comporte au moins deux zones de contact (20, 20') qui sont adaptées pour venir en appui contre le bord de l'ouverture (5) dans le boîtier dans la première et dans la deuxième position et qui sont disposées de façon symétrique par rapport à un axe de symétrie de 180° (13).

3. Système caméra selon la revendication 1 ou 2, **caractérisé en ce que**, dans la première et la deuxième position du chargeur (1), l'élément de raccordement (12) est adapté pour être relié au boîtier (2) de la caméra par coopération de formes, dans certaines zones du moins.

4. Système caméra selon la revendication 2 ou 3, **caractérisé en ce que** l'élément de raccordement a une section sensiblement en V et que l'axe de symétrie de 180° longe une bissectrice entre les faces internes des deux branches du V (21, 22).

5. Système caméra selon les revendications 1 à 4, **caractérisé en ce qu'**un dispositif de retenue en forme de fourche dans lequel est montée une poignée (11) est issu de moulage avec l'élément de raccordement (12).

6. Système caméra selon la revendication 5, **caractérisé en ce que** l'axe longitudinal de la poignée (11) est parallèle à l'une des branches du V (21, 22).

7. Système caméra selon l'une quelconque des revendications 2 à 6, **caractérisé en ce que** le bord de l'ouverture (5) dans le boîtier est muni d'un renfoncement en forme de gorge (30, 30') orienté de manière à être diamétralement opposé aux zones de contact (20, 20') de l'élément de raccordement (12).
